Europäisches Patentamt

European Patent Office

Office européen des brevets

(11) Veröffentlichungsnummer: **0 262 375 B1**

(19)

(12) **EUROPÄISCHE PATENTSCHRIFT**

(45) Veröffentlichungstag der Patentschrift: **25.03.92**

(51) Int. Cl.⁵: **A47J 36/06**, A47J 37/10

(21) Anmeldenummer: **87112133.1**

(22) Anmeldetag: **21.08.87**

(54) **Kochgefäss.**

(30) Priorität: **22.09.86 DE 3632167**

(43) Veröffentlichungstag der Anmeldung:
**06.04.88 Patentblatt 88/14**

(45) Bekanntmachung des Hinweises auf die
Patenterteilung:
**25.03.92 Patentblatt 92/13**

(84) Benannte Vertragsstaaten:
**AT CH DE LI NL**

(56) Entgegenhaltungen:
**DE-A- 2 332 785**
**DE-C- 611 888**
**FR-A- 533 895**
**FR-A- 1 472 853**
**US-A- 2 301 510**

(73) Patentinhaber: **FISSLER GMBH**
**Im Wörth 2 Postfach 12 23 20**
**W-6580 Idar-Oberstein 2(DE)**

(72) Erfinder: **Becht, Alexander Keil & Schaafhausen**
**Ammelburgstrasse 34**
**W-6000 Frankfurt am Main 1(DE)**
Erfinder: **Niese, Karl Keil & Schaafhausen**
**Ammelburgstrasse 34**
**W-6000 Frankfurt am Main 1(DE)**
Erfinder: **Hiller, Dorothee Keil & Schaafhausen**
**Ammelburgstrasse 34**
**W-6000 Frankfurt am Main 1(DE)**

(74) Vertreter: **Keil, Rainer A., Dipl.-Phys. Dr. et al**
**KEIL & SCHAAFHAUSEN Patentanwälte Eys-**
**seneckstrasse 31**
**W-6000 Frankfurt am Main 1(DE)**

**Beschreibung**

Die Erfindung betrifft ein verschließbares Kochgefäß, insbesondere Kochtopf, mit abnehmbarem Gefäß-Deckel mit einem Verdunster, welcher einen Speicher für die Aufnahme von Flüssigkeit und eine in den Gefäßinnenraum führende Verdunstungsöffnung sowie eine von außerhalb des geschlossenen Gefäßinnenraumes zugängliche Füllöffnung in einem deckelartigen Bauteil, vorzugsweise in der Deckwand des Gefäß-Deckels selbst aufweist, deren Größe wesentlich geringer als der lichte Öffnungsquerschnitt des Speichers ist.

Verdunster an Kochgefäßen dienen dazu, die Feuchtigkeit im Kochgefäßinnenraum, insbesondere dann anzureichern, wenn das geschlossene Kochgefäß zum Kochen in der Back- bzw. Bratröhre eines Herdes od. dgl. verwendet wird. Ist hierfür beispielsweise in eine Öffnung der Gefäß-Deckel-Wand ein Keramiknapf so eingehängt, daß seine porös durchlässigen Wandungen im Gefäßinnern und seine auf voller Weite offenen Napföffnung an der Oberseite des Gefäß-Deckels liegen, so verdunstet, da das Kochgefäß allseits im wesentlichen gleichmäßig erwärmt wird, die im Keramiknapf gespeicherte Flüssigkeit, wenn er nicht von einem eigenen Deckel verschlossen ist, zu großen Teilen nach außen und nicht in den die Speisen aufnehmenden Gefäßinnenraum, so daß verhältnismäßig viel und rasch Flüssigkeit "verloren" geht, ohne den Speisen zugute zu kommen. Ähnlich verhält es sich, wenn der in dem Gefäß-Deckel eingehängte Speicher aus Kunststoff besteht und an seinem Boden lediglich eine Austrittsöffnung aufweist, wobei hierbei insbesondere nachteilig ist, daß die Flüssigkeit vor der Verdunstung auf das Kochgut bzw. auf den Boden des Kochgefäßes gelangt.

Aus der FR-A-533 895 ist ein Kochgefäß-Verdunster für Kochtöpfe mit abnehmbarem Gefäß-Deckel und mit wenigstens teilweise aus dem Kochgefäß herausnehmbarem Verdunster bekannt, welcher einen Speicher für die Aufnahme von Verdunstungs-Flüssigkeit und eine für die Lage im Gefäßinnenraum vorgesehene Verdunstungsöffnung sowie eine von der Außenseite des geschlossenen Gefäßinnenraumes zugängliche Füllöffnung in Form einer Flüssigkeits-Eingießöffnung aufweist, deren Größe wenigstens im Betriebszustand des Verdunsters im wesentlichen geringer als der lichte Öffnungsquerschnitt des Speichers ist. Hierbei ist der Speicherraum des Speichers für die Verdunstungs-Flüssigkeit ausschließlich von Wandungen begrenzt, die einteilig mit dem übrigen Gefäß-Deckel ausgebildet sind. Auch die Eingießöffnung ist durch einen einteilig mit dem Speicher ausgebildeten Stutzen begrenzt. Der Speicher kann praktisch nicht gereinigt oder zur Beigabe von aromatisierenden Kräutern geöffnet werden. Es ist nicht erkennbar, wieviel Verdunstungs-Flüssigkeit sich im Speicher befindet. Außerdem nimmt die das Verdunstungsvolumen bestimmende Flüssigkeits-Oberfläche im Speicher mit sinkendem Flüssigkeits-Spiegel sehr schnell ab.

Auch bei dem Wasserverdunster nach der DE-C-611 888 sind sämtliche Wandungen des in diesem Falle porösen Speichers einteilig miteinander ausgebildet, was ebenfalls für die Begrenzung der Eingießöffnung gilt. Auch hier kann Speicher praktisch nicht gereinigt oder zur Beigabe von aromatisierenden Kräutern geöffnet und der Verdunstungs-Flüssigkeits-Stand im Speicher Kontrolliert werden. Im übrigen dient dieser Wasserverdunster nicht zur Anordnung an einem beheizbaren Gefäß, nämlich einem Kochgefäß, sondern zum Aufstülpen auf das angeschnittene Ende eines Brotlaibes.

Der Erfindung liegt die Aufgabe zugrunde, ein verschließbares Kochgefäß der gattungsgemäßen Art zu schaffen, bei welchem trotz leichter Abnehmbarkeit und Zugänglichkeit des Speichers reproduzierbar eine Verdunstungsöffnung zur Verfügung steht, welche in den Gefäßinnenraum führt.

Diese Aufgabe wird durch die im kennzeichnenden Teil des Anspruchs 1 genannten Merkmale gelöst. Dadurch sind trotz günstiger Gestaltungsmöglichkeiten der Füllöffnung und ggf. des Fülltrichters nur wenige gesonderte Bauteile zur Bildung des Verdunsters erforderlich.

Die einseitige Begrenzung des Austrittsbereichs der Verdunstungsöffnung, nämlich an seiner Unterseite von der Oberkante des Speichers und an seiner Oberseite vom im Abstand darüberliegenden deckelartigen Bauteil, das beim Kochen in der Backröhre od. dgl. verhältnismäßig heiß ist, hat den Vorteil, daß die verdampfte Flüssigkeit nach ihrem Austritt aus dem Austrittsbereich entlang der Unterseite der Deckwand des Gefäß-Deckels an einer aufgeheizten Leitfläche geführt wird und sich nicht sofort auf den meist kühleren Speisen niederschlagen kann.

Es hat sich als zweckmäßig erwiesen, wenn der Durchmesser einer kreisrunden Füllöffnung zwischen 4 mm und 20 mm, insbesondere zwischen 8 mm und 14 mm beträgt, wobei ein besonders günstiger Durchmesser bei 10 mm liegt. Die lichte Weite eines in Draufsicht kreisrunden Speichers ist dann vorzugsweise wesentlich größer als 30, insbesondere größer als 60 mm, wobei sich eine lichte Weite von etwa 90 mm als besonders zweckmäßig erwiesen hat. Sofern in der Füllöffnung ein fest angeordnetes Verschlußorgan, wie ein Verschlußstopfen, vorgesehen ist, mit welchem die Füllöffnung im Betriebszustand des Verdunsters wenigstens teilweise verschlossen werden kann, so kann sie im geöffneten Zustand, also im Nichtbetriebszustand des Verdunsters, auch gegenüber den genannten Maßen weiter sein. Das Verschlußorgan hat dann eine eigene, in der angegebenen Weise bemessene Füllöffnung, so daß eine Befüllung des Speichers auch im Betriebszustand, also bei eingesetztem Verschlußorgan, möglich ist.

Die Verdunstungsverhältnisse im Kochgefäß können auch wesentlich dadurch verbessert werden, daß die Verdunstungsöffnung mindestens einen schlitzförmigen, vorzugsweise ringschlitzartigen und etwa vertikal liegenden Austrittsbereich aufweist, der zweckmäßig nahe um die oder achsgleich zu der Mittelachse des Verdunsters bzw. des Speichers bzw. des Kochgefäßes liegt, so daß die verdunstende bzw. verdampfende Flüssigkeit in einem Kranz gleichmäßig radial nach außen gerichtet in das Kochgefäß eintritt.

Eine besonders einfache Handhabung ist dabei gewährleistet, wenn der Verdunster, vorzugsweise ausschließlich der Speicher, über eine bspw. kraftschlüssige Halterung, insbesondere eine Schnappverbindung und vorzugsweise an dem Gefäß-Dekkel, lösbar gehaltert ist, so daß er lediglich durch axiales Abziehen bzw. Kippen aus der Halterung gelöst und in sie eingesetzt werden kann. Stattdessen könnte der Speicher durch eine gewinde- bzw. bajonettverschlußartige Halterung gehalten werden.

Damit die Halterung trotz sicheren Haltens besonders leicht gängig ist, weist sie mindestens zwei, vorzugsweise drei, etwa gleichmäßig um den Speicher verteilte Halterungsnocken, wie federnde Schnappnocken od. dgl. auf, die in ein Halterungs-Gegenglied des Speichers eingreifen, einerseits einen sehr genau zentrierten Sitz des Speichers gewährleisten und andererseits die Austrittsöffnung der Verdunstungsöffnung nur in geringem Maße verkleinern.

Dies ist insbesondere der Fall, wenn die Halterungsnocken ringausschnittsförmig den Speicher umgeben, wobei das Halterungs-Gegenglied, vorzugsweise durch ein über den Umfang des Speichers durchgehendes Profil, wie eine Ringnut gebildet ist, die als sickenartige Mantelverformung des Speichers ausgebildet sein kann, und dadurch dessen Steifigkeit im Bereich seiner Oberkante erhöht. Durch die Ringnut kann der Speicher auch in jeder um seine Mittelachse verdrehten Stellung gleich gut eingesetzt bzw. entnommen werden.

Die Ausbildung des Speichers sowie die Halterung können noch weiter dadurch vereinfacht werden, daß die Halterung den Speicher übergreift, wobei insbesondere die Halterungsnocken am Außenumfang des Speichers liegen. Unabhängig hiervon liegen die Halterungsnocken und somit das Halterungs-Gegenglied unmittelbar benachbart zur Oberkante des Speichers. Es ist auch denkbar, die Halterung so auszubilden, daß sie in den Speicher eingreift, also über dessen Außenumfang nicht vorsteht.

Damit die Halterung, die mit allen Halterungsnocken auch ein einziges einstückiges Bauteil bilden kann, möglichst wenig Raum beansprucht, sind die Halterungsnocken nach einem weiteren Erfindungsmerkmal an Enden von vorzugsweise gesonderten winkelförmigen Haltern vorgesehen, die vorzugsweise mit einwärts gerichteten Schenkeln an dem deckelartigen Bauteil, bspw. durch Punktschweißung derart befestigt sind, daß die einwärts gerichteten Schenkel unmittelbar oberhalb der Oberkante des Speichers liegen.

Die Halterung kann dafür verwendet werden, die Strömung der verdunsteten Flüssigkeit durch den Austrittsbereich der Verdunstungsöffnung geringfügig zu drosseln, wozu die Halterung den Austrittsbereich der Verdunstungsöffnung in eine, insbesondere der Anzahl der einzelnen Halter bzw. Halterungsnocken entsprechende Anzahl voneinander getrennter Öffnungssegmente unterteilt, deren gesamter Bogenwinkel vorzugsweise größer als der der gesperrten Bereiche ist. Durch entsprechende Anordnung der gesperrten Bereiche läßt sich auf einfache Weise beeinflussen, in welche Zonen des Kochgefäßes die verdunstete Flüssigkeit zunächst hauptsächlich geleitet wird.

Eine besonders vorteilhafte Weiterbildung des Erfindungsgedankens besteht darin, daß die Füllöffnung (im Betriebszustand des Verdunsters), vorzugsweise am inneren Ende eines dieser gegenüber wesentlich weiteren, vorzugsweise gegenüber dem lichten Öffnungsquerschnitt des Speichers etwa gleich weiten, Fülltrichters vorgesehen ist. Dadurch kann jederzeit bequem in den Fülltrichter Flüssigkeit nachgegossen werden, die durch die engere Füllöffnung restlos und unmittelbar in den Speicher gelangt.

Im Zusammenhang mit der erfindungsgemäßen Ausbildung ist die Füllöffnung im Bereich der Oberkante des Speichers, vorzugsweise achsgleich zum Speicher, vorgesehen, so daß sich der Speicher leicht herstellen läßt.

Insbesondere wird vorgesehen, daß die Weite der vorzugsweise zylindrisch begrenzten Füllöffnung zwischen 1/15 und 1/2, vorzugsweise etwa 1/9 der Weite des z.B. annähernd zylindrischen Speichers beträgt.

Damit die Flüssigkeit auch bei Erschütterungen des Kochgefäßes möglichst sicher in den Speicher gelangt, kann die Füllöffnung durch einen, vorzugsweise ringförmigen, frei nach unten ragenden Stutzen gebildet sein, und Vorzugsweise im wesentlichen unterhalb der Oberkante des Speichers liegen.

Es ist vorteilhaft, wenn die Füllöffnung etwa in der Mittelachse des Gefäß-Deckels vorgesehen ist.

Damit der Verdunster bzw. der Speicher auch bei verhältnismäßig flacher Ausbildung des Kochgefäßes bzw. des Gefäß-Deckels verhältnismäßig hoch liegend angeordnet werden kann, ist bei einer weiteren Ausgestaltung der Erfindung der Fülltrichter flachschalen-, insbesondere stumpfwinklig kegelstumpfförmig, kugelkalottenförmig o.ä., und vorzugsweise einteilig mit dem deckelartigen Bauteil ausgebildet.

Der Fülltrichter kann kreisrund begrenzt sein bzw. kreisrunde Querschnitte aufweisen, jedoch ist es auch in vorteilhafter Weise möglich, daß der Fülltrichter etwa gleiche Grundrißform wie der Gefäß-Deckel, nämlich bspw. angenähert rechteckige Grundrißform aufweist, so daß er bei länglichem Kochgefäß bzw. Gefäß-Deckel auch von den entsprechenden Endseiten her besonders gut zugänglich ist. Obwohl es denkbar ist, den Speicher auch mit gleicher Grundrißform wie den Fülltrichter auszubilden, ist es doch in aller Regel zweckmäßig, wenn der Speicher kreisrunde Grundrißform, also im Falle eines mehreckig begrenzten Fülltrichters eine von diesem abweichende Grundrißform aufweist.

Der der Temperatur im geschlossenen Kochgefäß ausgesetzte Speicher hat ein besonders günstiges thermisches Verhalten und läßt sich auch sehr stabil sowie mit geringem Gewicht herstellen, wenn er aus rostfreiem Stahl besteht und vorzugsweise durch einen tiefgezogenen Bauteil gebildet ist. Unabhängig hiervon besteht zweckmäßig auch der die Füllöffnung begrenzende bzw. der den Fülltrichter bildende Bauteil aus rostfreiem Stahl, wodurch auch sehr gute Reinigungsmöglichkeiten gegeben sind und eine besonders dünnwandige Ausbildung möglich ist.

In weiterer Ausgestaltung der Erfindung ist der Speicher im Grundriß wesentlich kleiner als der Deckel ausgebildet, wobei er zweckmäßig im Zentrum des Deckels angeordnet ist, so daß er nach allen Richtungen in gleicher Weise Dampf abgeben kann und Speisen außerhalb des Grundrisses des Verdunsters verhältnismäßig hoch im Kochgefäß aufgeschichtet werden können.

Es hat sich als vorteilhaft erwiesen, wenn der Speicher bei einer Höhe von etwa 25 bis 60 mm, insbesondere von etwa 35 mm, ein Fassungsvermögen von etwa 1/5 bis 1/10, insbesondere etwa 1/8 Liter aufweist. Die Höhe des Speichers ist also zweckmäßig kleiner als dessen Weite, so daß er nur verhältnismäßig wenig Raum in Höhenrichtung des Kochgefäßes einnimmt.

Eine besonders einfache Ausbildung des Erfindungsgegenstandes ergibt sich, wenn die Füllöffnung in die Verdunstungsöffnung des Speichers mündet. Dadurch braucht der Speicher zum Anschluß an die Füllöffnung - wie auch denkbar - keine gesonderte Öffnung aufzuweisen.

Der Verdunster bzw. dessen Speicher kann in unterschiedlichster Weise am Kochgefäß - bspw. auch am Untertopf - angeordnet bzw. gehalten werden. Zur besonders einfachen Handhabung ist der Verdunster jedoch wenigstens teilweise, insbesondere der Speicher, am Gefäß-Deckel vorgesehen, wobei der Verdunster bzw. der Speicher vorteilhaft in jedem Fall abnehmbar angeordnet ist.

Damit der gesamte Innenraum des Kochgefäß-Untertopfes im wesentlichen bis zu dessen Oberkante ungehindert mit Speisen gefüllt werden kann, ist es vorteilhaft, wenn der Verdunster vollständig oberhalb der unteren Stirnfläche eines Deckelrandes des Gefäß-Deckels liegt. Dadurch kommt auch beim Abstellen des Gefäß-Deckels auf einer ebenen Stellfläche der Verdunster bzw. der Speicher nicht in Berührung mit dieser Stellfläche. Für bestimmte Arten von Kochgefäßen kann es aber auch zweckmäßig sein wenn der Verdunster nach unten über den Gefäß-Deckel vorsteht und vorzugsweise mit der Bodenfläche des Speichers eine Standfläche für den Gefäß-Deckel bildet. Diese Ausbildung ist insbesondere für solche Gefäß-Deckel geeignet, die als Flachdeckel ausgebildet sind und bei denen dann bspw. der Fülltrichter nach unten weiter vorsteht als der Deckelrand, wobei in diesem Fall zweckmäßig die Halterung Standflächen für den Gefäß-Deckel so bildet, daß, wenn der Speicher abgenommen ist, der die Füllöffnung aufweisende Bauteil nicht in Berührung mit der Stellfläche gelangen kann.

Eine besonders vorteilhafte Ausbildung des Kochgefäßes der erfindungsgemäßen Art ist gemäß weiterer Erfindungsmerkmale gekennzeichnet durch mindestens eine gesonderte, von außen unter Umgehung des Verdunsters in den geschlossenen Gefäßinnenraum führende Eingießöffnung, die vorzugsweise im Bereich eines vom Fülltrichter gesonderten Eingießtrichters (an der Außenseite des Kochgefäßes) vorgesehen ist. Eine solche Eingeißöffnung ist insbesondere dafür geeignet, Flüssigkeiten wie Wasser, vor allem aber aromatisierende Flüssigkeiten, wie Wein, Bier, Kognak od. dgl., unter Umgehung einer vorangehenden Verdunstung direkt auf die Speisen bzw. auf den Gefäß-Boden zu bringen, während der Verdunster selbst ausschließlich dafür vorbehalten bleiben kann, Wasser zu verdunsten.

Damit der Verdunster bzw. der Speicher hierfür nicht von einem Eingießkanal durchsetzt zu sein braucht, liegt die Eingießöffnung frei oberhalb des Gefäß-Bodens und vorzugsweise außerhalb des Verdunsters bzw. außerhalb von dessen Außenumfang.

Die einzugießende Flüssigkeit kann in vorteilhafter Weise v erhältnismäßig gleichmäßig über ein relativ großes Feld verteilt in das Kochgefäß eingebracht werden, wenn mehrere, insbesondere gleiche Eingießöffnungen, vorzugsweise in einem Kranz um den Verdunster, vorgesehen sind.

Zur raumsparenden Ausbildung sind die Eingießöffnungen etwa in Höhe des Verdunsters vorgesehen. Ferner liegen sie zweckmäßig nur mit geringem Abstand vom Außenumfang des Verdunsters bzw. des Speichers. Bei einer besonders einfachen Ausbildung sind die Eingießöffnungen wie die Füllöffnung als Durchbruch im deckelartigen Bauteil bzw. im Gefäß-Deckel vorgesehen.

Um eine zu schnelle Zumischung der meist kalt eingebrachten Eingießflüssigkeit in das Kochgefäß bzw. ggf. in die in diesem befindliche Soßenzubereitung zu verhindern, ist die Größe der Eingießöffnung wesentlich geringer als die der Füllöffnung, wobei die Größe der Eingießöffnung mit bspw. etwa 2 mm so klein gewählt sein kann, daß sie unter der Wirkung der Oberflächenspannung der Flüssigkeit nach Art eines Tropfenspenders wirkt, durch den die Flüssigkeit nur in aufeinanderfolgenden einzelnen Tropfen freigegeben wird. Der Gesamtquerschnitt aller Eingießöffnungen kann dabei kleiner als der Querschnitt der Füllöffnung sein, wobei er zweckmäßig zwischen 1/5 und 1/2, vorzugsweise etwa 1/4, des Querschnittes der Füllöffnung beträgt.

Auch die beschriebene Eingießeinrichtung läßt sich sehr bequem handhaben, wenn der Eingießtrichter nach Art einer, vorzugsweise im Querschnitt flachschalenförmigen, Rinne ausgebildet ist, die an ihrem Boden von den Eingießöffnungen durchsetzt ist, so daß der Eingießtrichter einen Zwischenspeicher für die Eingießflüssigkeit bildet, die in diesem Zwischenspeicher in größerer Menge eingegeben werden kann und danach über einen längeren Zeitraum in das Kochgefäß fließt bzw. tropft.

Liegt der Eingießtrichter ringförmig um den Verdunster, so bildet er benachbart zum Austrittsbereich der Verdunstungsöffnung eine radial nach außen und schräg nach unten gerichtete Leitfläche für die verdunstete Flüssigkeit, die durch diese Leitfläche schräg nach unten und außen gerichtet in das Kochgefäß eingeleitet wird.

Der Eingießtrichter kann dabei in einfacher Weise etwa in gleicher Höhe wie der Fülltrichter liegen bzw. etwa gleiche Höhe wie dieser aufweisen. Sowohl der Fülltrichter als auch der Eingießtrichter führen zu einer wesentlichen Versteifung der Deckwand des zugehörigen Bauteiles.

Damit die Halterung für den Speicher möglichst wenig Raum beansprucht, steht sie zweckmäßig nach unten nur etwa so weit wie der Fülltrichter und/oder der Eingießtrichter, insbesondere geringfügig weiter vor.

Insbesondere bei ringförmiger Ausbildung des Eingießtrichters ist er im Querschnitt zweckmäßig wesentlich schmaler als der Fülltrichter, wobei sein Gesamtaufnahmevolumen jedoch gegenüber dem des Fülltrichters größer sein kann.

Damit Flüssigkeit nicht in unerwünschter Weise zwischen den Trichtern hin und her, insbesondere vom Eingießtrichter in den Fülltrichter schwappen kann, ist der obere Rand des Fülltrichters von dem des Eingießtrichters durch einen schmalen Zwischendamm getrennt, der insbesondere geringfügig tiefer als die von ihm abgekehrte Begrenzung des Eingießtrichters, also bei ringförmiger Ausbildung als dessen Außenumfang, liegt.

Auch vom Außenumfang des Gefäß-Deckels liegt der Eingießtrichter zweckmäßig im Abstand, so daß er dessen Außenkontur nicht beeinflußt. Der Eingießtrichter könnte aber auch annähernd bis an den Außenumfang des Gefäß-Deckels reichen.

Durch die erfindungsgemäße Ausbildung ist ein Verdunstungseinsatz mit Aromaverteiler gebildet, mit welchem das Klima im Kochgefäß besonders gut beeinflußt werden kann und mit welchem auch insbesondere flüssige Zutaten ohne Öffnen in das geschlossene Kochgefäß eingebracht werden können.

Sowohl die beschriebenen als auch weitere Ziele, Merkmale, Vorteile und Anwendungsmöglichkeiten von erfindungsgemäßen Weiterbildungen g ehen auch aus der Zeichnungsbeschreibung und den Zeichnungen hervor. Die einzelnen Merkmale können jeweils für sich allein oder zu mehreren in Form von Unterkombinationen auch unabhängig von ihrer Zusammenfassung in den Ansprüchen bei einer Ausführungsform der Erfindung verwirklicht sein. Die Erfindung bezieht sich dabei nicht nur auf das Kochgefäß als Ganzes, sondern selbständig auch auf dessen Deckel bzw. den Verdunster.

In den Zeichnungen sind mehrere Ausführungsbeispiele der Erfindung dargestellt, die im folgenden näher erläutert werden.

Es zeigen:

Fig. 1    einen Ausschnit eines mit einem erfindungsgemäßen Verdunster versehenen erfindungsgemäßen Kochgefäßes in Ansicht,

Fig. 2    eine Teil-Draufsicht auf das Kochgefäß und den Verdunster gemäß Fig. 1,

Fig. 3    den erfindungsgemäßen Gefäß-Deckel des erfindungsgemäßen Kochgefäßes gemäß den Fig. 1 und 2 im Querschnitt,

Fig. 4    einen Ausschnitt eines weiteren erfindungsgemäßen Gefäß-Deckels in Draufsicht, teilweise weggebrochen,

Fig. 5    eine Schnittansicht nach der Linie V-V von Fig. 4, in vergrößerter Darstellung, und

Fig. 6    eine Schnittansicht nach der Linie VI-VI von Fig. 4 in vergrößerter Darstellung.

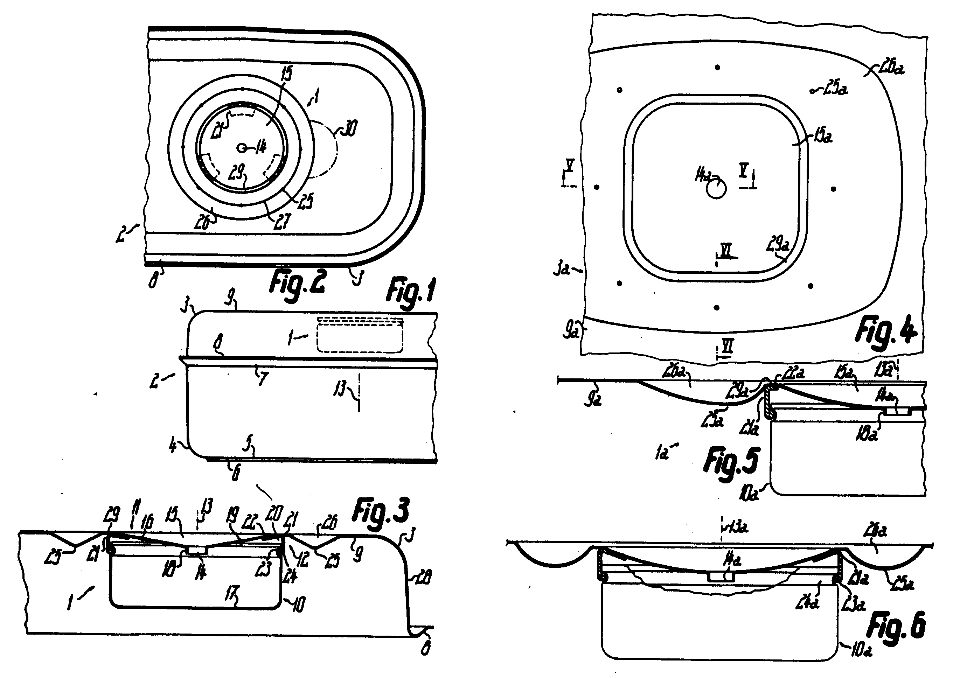

Der erfindungsgemäße Verdunster 1 ist gemäß den Fig. 1 bis 3 an einem in Draufsicht angenähert länglich-rechteckigen erfindungsgemäßen Kochgefäß 2 mit geringfügig nach außen ausgebauchten Seitenwandungen vorgesehen, das im wesentlichen aus einem niedrigeren Gefäß-Deckel 3 und einem höheren Gefäß-Untertopf 4 von etwa gleicher Grundrißform besteht. Der an der Unterseite des Gefäß-Bodens 5 mit einem plattenförmigen, sogenannten Elektroboden 6 versehene Gefäß-Untertopf 4 bildet mit seinem oberen Rand einen schräg nach außen gerichteten Schütt- und Tragrand 7, in welchen der Gefäß-Deckel 3 mit einem an seiner Unterseite vorgesehenen, im Querschnitt nach außen und oben gerichteten Randprofil 8 derart abhebbar eingreift, daß das Randprofil 8 praktisch nicht über den Außenumfang des Schütt- und Tragrandes 7 vorsteht. Durch die ineinandergreifenden Ränder 7, 8 ist das Kochgefäß 2 im Bereich der Trennfuge zwischen Gefäß-Deckel 3 und Gefäß-Untertopf 4 verhältnismäßig dicht verschlossen. Die über große Bereiche in einer zum Gefäß-Boden 5 parallelen Ebene liegende Deckwand 9 des haubenförmigen Gefäß-Deckels 3 geht ebenso wie der Gefäß-Boden 5 im Querschnitt über teilkreisförmig abgerundete Randbereiche in die zugehörige Mantelwand über, die im Querschnitt bis zum jeweils zugehörigen Rand 7, 8 annähernd gradlinig verläuft. Die Höhe des Gefäß-Deckels 3 liegt im dargestellten Ausführungsbeispiel etwa in der Größenordnung der Hälfte des Gefäß-Untertopfes 4.

Der Verdunster 1 besteht im wesentlichen aus einem annähernd zylindrisch napfförmigen Speicher 10, einem einteilig mit der Deckwand 9 ausgebildeten deckelartigen Bauteil 11 und einer Halterung 12 zum lösbaren Halten des Speichers 10 an dem deckelartigen Bauteil 11, die alle im wesentlichen symmetrisch zu einer vertikalen Mittelachse 13 angeordnet sind, wobei die Mittelachse 13 gleichzeitig die zentrale, zum Gefäß-Boden 5 rechtwinklige Mittelachse des Kochgefäßes 2 ist. Bei in die Halterung 12 eingesetztem Speicher 10 liegt sowohl dessen Oberkante 16 als auch sein dazu eben-paralleler Boden 17 parallel zur Ebene der Deckwand 9, wobei der Boden 17 mit Abstand oberhalb der Unterkante des Profilrandes 8 vorgesehen ist, während die auf voller Weite offene, durch die obere Stirnfläche des Speichermantels gebildete Oberkante 16 mit spaltartig geringem Abstand unterhalb der Unterseite der Deckwand 9 des Bauteiles 11 liegt. Der Bauteil 11 ist in der Mittelachse 13 von einer einzigen zylindrischen Füllöffnung 14 durchsetzt, die von inem rohr- bzw. ringförmig nach unten frei vorstehenden Stutzen 18 begrenzt ist, welcher einteilig mit dem Bauteil 11 ausgebildet ist.

Die Füllöffnung 14 bzw. der gesamte Stutzen 18 liegt mit geringem Abstand unterhalb d er Oberkante 16 des Speichers 10 und liegt an der tiefsten Stelle eines Fülltrichters 15, der durch eine äußere Vertiefung in dem Bauteil 11 gebildet ist und über dessen Unterseite des Stutzens 18 vorsteht. Der symmetrisch zur Mittelachse 13 ausgebildete, flachschalenförmige, dünnwandige Fülltrichter 15 ist im dargestellten Ausführungsbeispiel kegelstumpfförmig ausgebildet, wobei seine Kegelfläche nur geringfügig kleiner als der Außen- bzw. Innendurchmesser des Speichers 10, während die Höhe des Fülltrichters 15 wesentlich kleiner als die Höhe des Speichers 10 und kleiner als die Weite der Füllöffnung 14 ist. Im Bereich des an der Oberkante 16 liegenden Außenrandes des Speichers 10 liegt die Unterseite des Fülltrichters 15 bzw. der an diesen nach außen anschließende Bereich des Bauteiles 11 mit geringem Abstand oberhalb der Oberkante 16, derart, daß die Trichterwandung des Fülltrichters 15 mit ihrer Unterseite eine vom Zentrum des Speichers 10 unter einen flachen Winkel nach außen und oben ansteigende Leitfläche bildet. Die obere Napföffnung des Speichers 10 bildet gleichzeitig dessen Verdunstungsöffnung 19, durch welche die verdunstenden Anteile der im Speicher 10 enthaltenen Flüssigkeit aus dem Speicher 10 gegen die Unterseite des Fülltrichters 15 austreten. Die verdunstete Flüssigkeit wird dabei gegen die Unterseite des Fülltrichters 15 geleitet, an dieser nach außen umgelenkt und tritt dann durch Austrittsbereiche 20 der Verdunstungsöffnung 19 in den Innenraum des Kochgefäßes 2 aus, wobei diese Austrittsbereiche 20 durch die obere Randkante 16 des Speichers 10 und die unmittelbar darüberliegende Unterseite des Bauteiles 11 ringschlitzförmig begrenzt sind.

Die Halterung 12 weist drei gleichmäßig um die Mittelachse 13 verteilte, gesonderte, annähernd winkelförmige Halter 21 aus rostfreiem Stahl od. dgl. auf, die jeweils mit einem zur Mittelachse 13 ausragenden Schenkel 22 an der Unterseite des Bauteiles 11 im Bereich des Außenumfanges des Fülltrichters 15 anliegend befestigt sind und am unteren Ende des anderen, frei nach unten ragenden Schenkels einen Halterungsnocken 23 aufweisen, der im Querschnitt annähernd halbkreisförmig über die der Mittelachse 13 zugekehrte Innenseite dieses Schenkels vorsteht. Die Halterungsnocken 23 können in einfacher Weise durch Falzen der unteren Enden der zugehörigen Schenkel der Halter 21 gebildet sein. Dem Halterungsnocken 23 ist am Speicher 10 ein Halterungs-Gegenglied 24 zugeordnet, das durch eine Ringsicke im Mantel des Speichers 10 gebildet ist und von dessen Oberkante 16 einen Abstand hat, der etwa in der Größenordnung seiner Breite liegt, vorzugsweise demgegenüber geringfügig kleiner ist. Das Halterungs-Gegenglied 24 bildet an der Außenseite eine im Querschnitt annähernd halbkreisförmige Ringnut, deren Querschnittsform an die der Halterungsnocken 23 angepaßt ist. Die die Halterungsnocken 23 tragenden Schenkel der Halter 21 sind federelastisch aufspreizbar und greifen jeweils über einen Bogenwinkel von höchstens etwa 45°, vorzugsweise weniger als 40° und mindestens 30°, mit ihren Halterungsnocken 23 in das Halterungs-Gegenglied 24 ein. Durch Herauskippen des Speichers 10 aus der Halterung 12 lösen sich die halterungsnocken 23 federnd aus dem Halterungs-Gegenglied 24, so daß der Speicher 10 ggf. gereinigt oder mit einer Erstfüllung gefüllt werden kann. Die klammerartigen Halterungsnocken 23 liegen etwa in Höhe des Stutzens 18. Durch die Halter 21 ist der Austrittsbereich 20 in drei gleichmäßig um die Mittelachse 13 verteilte Einzelöffnungen unterteilt, deren Bogenwinkel jeweils etwa 90°, vorzugsweise geringfügig weniger beträgt. Zwei Einzelöffnun gen sind in Draufsicht gem. Fig. 2 gegen Eckbereich des Kochgefäßes 2 gerichtet, während ein Austrittsbereich gegen die Mitte einer langen Außenwand des Kochgefäßes 2 gerichtet ist. Oberhalb und unterhalb des Halterungs-Gegengliedes 24 weist der napfförmige Speicher 10 konstante Querschnitte auf, wobei sein Mantel in den Boden 17 über im Querschnitt teilkreisförmig abgerundete Übergangsbereiche übergeht.

Um die Mittelachse 13 bzw. die Füllöffnung 14 und den Verdunster 1 ist ein Kranz von einer bis zwölf, vorzugsweise sechs bis acht Eingießöffnungen 25 vorgesehen, die durch Durchbrüche des Bauteiles 11 gebildet sind, vorzugsweise gleiche Winkelabstände voneinander haben und mit einem gegenüber ihrem Durchmesser mehrfach größeren Abstand vom Außenumfang des Verdunsters 1 bzw. des Speichers 10 etwa in Höhe der tiefsten Stelle des Fülltrichters 15, also etwa in Höhe des oberen Endes des Stutzens 18, liegen. Die Eingießöffnungen 25 liegen im tiefsten Bereich eines ringnutförmig sich um die Mittelachse 13 erstreckenden Eingießtrichters 26, der im dargestellten Ausführungsbeispiel im Axialschnitt durch die Eingießöffnung 25 gemäß Fig. 3 symmetrisch ausgebildet ist. Der Eingießtrichter 26 ist radial innerhalb der Eingießöffnungen 25 sowie radial außerhalb von diesen jeweils kegelstumpfförmig begrenzt, wobei der Flanken- bzw. Trichterwinkel mit etwa 125° kleiner als der des Fülltrichters 15 ist und die beiden Kegelstumpfflächen in der tiefsten Stelle des Eingießtrichters 26 in einer von den Eingießöffnungen 25 durchsetzten Ringkante ineinander übergehen. Die größte Ringnutbreite des ringnutförmigen Eingießtrichters 26 ist wesentlich kleiner als die größte Weite des Fülltrichters 15, nämlich nur etwa 1/3 so groß wobei der Außenumfang des Eingießtrichters 26 vom Außenumfang 28 des Deckels 3 allseits einen Abstand hat, der mindestens so groß wie die Nutbreite des Eingießtrichters 26 ist. Der Eingießtrichter 26 hat auch allseits Abstand von dem teilkreisförmigen Übergangsabschnitt zwischen Deckwand 9 und Mantelwand des Gefäß-Deckels 3.

Der obere Rand des Fülltrichters 15 ist über seinen gesamten Umfang vom inneren oberen Rand des Eingießtrichters 26 durch einen ringförmigen, in der Ebene der Deckwand 9 liegenden Zwischendamm 29 getrennt, dessen Breite bspw. mit etwa 3 mm kleiner als die Nutbreite des Eingießtrichters 26 ist. Am Außenumfang des Eingießtrichters 26 kann bspw. in der in Fig. 2 strichpunktiert angedeuteten Weise mindestens ein Hilfstrichter 30 als Eingießbereich anschließen, wobei dieser Hilfstrichter 30 im dargestellten Fall in Draufsicht teilkreisförmig begrenzt ist und die in ihn eingegossene Flüssigkeit zur Verteilung in den Eingießtrichter 26 weiterleitet.

In den Fig. 4 bis 6 sind für einander entsprechende Teile die gleichen Bezugszeichen wie in den Fig. 1 bis 3, jedoch mit dem Index "a" verwendet.

Die äußere, ringförmige Begrenzung des Eingießtrichters 26a ist bei der Ausführungsform nach den Fig. 4 bis 6 an die Grundform des Kochgefäßes 2 bzw. des Gefäß-Deckels 3a angepaßt, nämlich angenähert rechteckig, wobei die Rechteck-Außenkanten in Ansicht nach außen gebaucht gekrümmt verlaufen und über mit verhältnismäßig großem Krümmungsradius abgerundete Eckbereiche ineinander übergehen. Dadurch ist der Abstand des Eingießtrichters 26a von den Schmalseiten des Gefäß-Deckels 3a nicht, oder nicht wesentlich größer als von den längsseiten wie bei der Ausführungsform nach den Fig. 1 bis 3, sondern bspw. angenähert gleich groß. Die benachbart zu den Schmalseiten liegenden Zonen des Eingießtrichters 26a haben daher auch eine größere Nutbreite als die benachbart zu den Längsseiten liegenden Zonen. Die breiteren Zonen sind im Axialschnitt durch die jeweilige Eingießöffnung nicht symmetrisch ausgebildet, derart, daß die Eingießöffnungen 25a näher bei der inneren Begrenzung als bei der äußeren Begrenzung des Eingießtrichters 26a liegen, der im Querschnitt gemäß Fig. 5 von der jeweiligen Eingießöffnung 25a nach außen flacher ansteigt als nach innen zur Mittelachse 13a. Sowohl der nach außen als auch der nach innen im Querschnitt an die jeweilige Eintrittsöffnung 25a anschließende Abschnitt des Eingießtrichters 26a ist im Querschnitt teilkreisförmig konkav gekrümmt, wobei der äußere Abschnitt einen entsprechend größeren Krümmungsradius aufweist. Im Bereich der schmaleren Zonen ist der Eingießtrichter 26a gemäß Fig. 6 im Querschnitt teilkreisförmi g mit einem Bogenwinkel von weniger als 180°.

Der Fülltrichter 15a ist in Draufsicht gemäß Fig. 4 annähernd rechteckig bzw. quadratisch mit abgerundeten Eckbereichen begrenzt, während er im Querschnitt gemäß den Fig. 5 und 6 nahezu kugelkalottenförmig bzw. konkav teilkreisförmig begrenzt ist. Die Länge des Stutzens 18a ist wesentlich kleiner als seine lichte Weite. Der Zwischendamm 29a, an dessen Unterseite die etwa gleich breiten Schenkel 22a der Halter 21a befestigt sind, liegt gegenüber der oberen Ebene der Deckwand 9a geringfügig um wenige mm, bspw. etwa 2 mm, vertieft, so daß ggf. Flüssigkeit aus dem Eingießtrichter 26a, bevor sie nach außen über diesen überläuft, in den Fülltrichter 15a und von dort in den Speicher 10a geleitet wird. die Halter 21a sind in Fig. 6 gegenüber Fig. 5 in einer abweichenden Anordnung, nämlich in einer mit der Ausbildung nach Fig. 3 vergleichbaren Anordnung dargestellt. Die in den Fig. 5 und 6 dargestellten Querschnittsformen für den Fülltrichter 15a bzw. für den Eingießtrichter 26a können auch bei der Aus führungsform nach den Fig. 1 bis 3 vorgesehen sein. Die Nutbreite des Eingießtrichters 26a ist bei der in Fig. 5 dargestellten Ausführungsform etwa so groß wie die Hälfte der größten Weite des Fülltrichters 15a. Es ist auch denkbar, daß der Speicher 10a gemäß Fig. 5 in Draufsicht in Anpassung an die rechteckige Begrenzung des Fülltrichters 15a entsprechend rechteckig ausgebildet ist.

Durch die erfindungsgemäße Ausbildung ist das Kochgefäß 2 auch sehr gut zum Überbacken und als Auflaufform geeignet. Die in dem Speicher 10, 10a befindliche heiße Flüssigkeit kann praktisch nicht überschwappen. Ferner sind, sofern der Gefäß-Deckel 3, 3a Griffe aufweist, diese zweckmäßig in Form metallischer Bügelgriffe im Abstand von der Füllöffnung 14, 14a bzw. von den Eingießöffnungen 25, 25a bspw. im Bereich des Außenrandes des Gefäß-Deckels 3, 3a vorgesehen, so daß also der Bereich der genannten Öffnungen 14, 14a, 25, 25a von Griffen vollständig frei ist und daher Verletzungen durch Verbrühungen weitestgehend vermieden sind. Im Bereich der genannten Öffnungen 14, 14a; 25, 25a bzw. der zugehörigen Trichter 15, 15a; 26, 26a sind nämlich keinerlei über die Oberseite des Gefäß-Deckels 3, 3a vorstehende Teile vorgesehen. Es ist auch denkbar, den Speicher 10, 10a aus vorzugsweise wasserundurchlässiger Keramik herzustellen, da er verhältnismäßig gut geschützt im Gefäß-Deckel 3, 3a liegt. Insbesondere bei Kochgefäßen 2, die gemäß Fig. 2 in Draufsicht rechteckig oder quadratisch begrenzt sind, kann der Speicher 10, 10a und/oder der Fülltrichter 15, 15a ebenfalls rechteckig bzw. quadratisch begrenzt sein, wobei seine etwa viertelkreisförmig ineinander übergehenden Außenkanten zweckmäßig parallel zu den äußeren Begrenzungen des Kochgefäßes 2 liegen und auch der Zwischendamm 29, 29a eine entsprechend rechteckige Form aufweist. Bei einer solchen Anordnung reichen auch zwei im Bereich der Mitte der Länge von Außenkanten vorgesehene, einander gegenüberliegende Halter 21, 21a zur leicht lösbaren aber stabilen Sicherung des Speichers 10, 10a.

**Patentansprüche**

1. Verschließbares Kochgefäß (2), insbesondere Kochtopf, mit abnehmbarem Gefäß-Deckel (3) mit einem Verdunster (1), welcher einen Speicher (10) für die Aufnahme von Flüssigkeit und eine in den Gefäßinnenraum führende Verdunstungsöffnung (19) sowie eine von außerhalb des geschlossenen Gefäßinnenraumes zugängliche Füllöffnung (14) in einem deckelartigen Bauteil (11), vorzugsweise in der Deckwand (9) des Gefäß-Deckels (3) selbst aufweist, deren Größe wesentlich geringer als der lichte Öffnungsquerschnitt des Speichers (10) ist, dadurch gekennzeichnet, daß der Speicher (10) ein an seiner Oberkante (16) auf größerer Weite als die Füllöffnung (14) offener Napf ist, welcher derart am Gefäß-Deckel (3) abnehmbar angeordnet ist, daß die Unterseite eines Austrittsbereiches (20) der Verdunstungsöffnung (19) von der Oberkante (16) des Speichers (10) und dessen Oberseite von dem im Abstand liegenden deckelartigen Bauteil (11), vorzugsweise von der Deckwand (9) des Gefäß-Deckels (3) selbst, begrenzt ist.

2. Kochgefäß nach Anspruch 1, dadurch gekennzeichnet, daß die Verdunstungsöffnung (19) mindestens einen schlitzförmigen, insbesondere ringschlitzartigen und im wesentlichen vertikal liegenden Austrittsbereich (20) aufweist.

3. Kochgefäß nach Anspruch 1 oder 2, dadurch gekennzeichnet, daß der Speicher (10) über eine vorzugsweise als Schnappverbindung ausgebildete Halterung (12) an dem Gefäß-Deckel (3) lösbar gehaltert ist.

4. Kochgefäß nach Anspruch 3, dadurch gekennzeichnet, daß die Halterung (12) mindestens zwei, vorzugsweise drei, etwa gleich mäßig um den Speicher (10) verteilte federnde Halter (21) mit Halterungsnocken (23) od. dgl. aufweist, die in ein Halterungs-Gegenglied (24) des Speichers (10) eingreifen.

5. Kochgefäß nach Anspruch 4, dadurch gekennzeichnet, daß die Halterungsnocken (23) ringausschnittförmig den Speicher (10) umgeben und daß das Halterungs-Gegenglied (24) vorzugsweise durch ein über den Umfang des Speichers (10) durchgehendes Profil, wie eine Ringnut, gebildet ist.

6. Kochgefäß nach einem der Ansprüche 3 bis 5, dadurch gekennzeichnet, daß die Halterung (12) am Außenumfang des Speichers (10) und/oder unmittelbar benachbart zu dessen Oberkante (16) liegt.

7. Kochgefäß nach einem der Ansprüche 4 bis 6, dadurch gekennzeichnet, daß die Halterungsnocken (23) an Enden von vorzugsweise gesonderten, winkelförmigen Haltern (21) vorgesehen sind, die vorzugsweise mit einwärts gerichteten Schenkeln (22) an dem deckelartigen Bauteil (11) befestigt sind.

8. Kochgefäß nach einem der Ansprüche 3 bis 7, dadurch gekennzeichnet, daß die Halterung (12) den Austrittsbereich (20) der Verdunstungsöffnung (19) in eine insbesondere der Anzahl der Halter (21) ensprechende Anzahl von voneinander getrennten Öffnungssegmenten unterteilt, deren Bogenwinkel vorzugsweise größer als der der gesperrten Bereiche ist.

9. Kochgefäß nach einem der Ansprüche 1 bis 8, dadurch gekennzeichnet, daß die Füllöffnung (14) vorzugsweise am inneren Ende eines dieser gegenüber wesentlich weiteren, gegenüber dem lichten Öffnungsquerschnitt des Speichers (10) etwa gleich weiten, Fülltrichters (15) vorgesehen ist.

10. Kochgefäß nach einem der Ansprüche 1 bis 9, dadurch gekennzeichnet, daß die Füllöffnung (14) im Bereich der Oberkante (16) des Speichers (10) vorzugsweise achsgleich zum Speicher (10), vorgesehen ist.

11. Kochgefäß nach einem der Ansprüche 1 bis 10, dadurch gekennzeichnet, daß die Weite der vorzugsweise zylindrisch begrenzten Füllöffnung (14) zwischen 1/15 und 1/2, vorzugsweise etwa 1/9 der Weite des z.B. annähernd zylindrischen Speichers (10) beträgt.

12. Kochgefäß nach einem der Ansprüche 1 bis 11, dadurch gekennzeichnet, daß die Füllöffnung (14) durch einen vorzugsweise ringförmigen, frei nach unten ragenden Stutzen (18) gebildet ist und vorzugsweise im wesentlichen unterhalb der Oberkante (16) des Speichers (10) liegt.

13. Kochgefäß nach einem der Ansprüche 1 bis 12, dadurch gekennzeichnet, daß die Füllöffnung (14) etwa in der Mittelachse (13) des Gefäß-Deckels (3) vorgesehen ist.

14. Kochgefäß nach einem der Ansprüche 9 bis 13, dadurch gekennzeichnet, daß der Fülltrichter (15) flachschalen-, insbesondere stumpfwinklig kegelstumpfförmig, kugelkalottenförmig o.ä. und vorzugsweise einteilig mit dem deckelartigen Bauteil (11), ausgebildet ist.

15. Kochgefäß nach einem der Ansprüche 9 bis 14, dadurch gekennzeichnet, daß der Fülltrichter (15a) etwa gleiche Grundrißform wie der Gefäß-Deckel (3a) und/oder eine vom Speicher (10a) abweichende Grundrißform aufweist.

16. Kochgefäß nach einem der Ansprüche 1 bis 15, dadurch gekennzeichnet, daß der die Füllöffnung (14) begrenzende bzw. den Fülltrichter (15) bildende deckelartige Bauteil (11) und/oder der Speicher (10) aus rostfreiem Stahl od. dgl. besteht und vorzugsweise durch einen tiefgezogenen Bauteil aus Blech od. dgl. gebildet ist.

17. Kochgefäß nach einem der Ansprüche 1 bis 16, dadurch gekennzeichnet, daß der Speicher (10) im Grundriß wesentlich kleiner als der Gefäß-Deckel (3) ausgebildet ist und vorzugsweise bei einer Höhe von etwa 25 bis 60 mm, insbesondere von 35 mm, ein Fassungsvermögen von etwa 1/5 bis 1/10, insbesondere von etwa 1/8 Liter aufweist.

18. Kochgefäß nach einem der Ansprüche 1 bis 17, dadurch gekennzeichnet, daß die Füllöffnung (14) in die Verdunstungsöffnung (19) des Speichers (10) mündet.

19. Kochgefäß nach einem der Ansprüche 1 bis 18, dadurch gekennzeichnet, daß der Verdunster (1) vollständig oberhalb der unteren Stirnfläche eines Deckelrandes des Gefäß-Deckels (3) liegt.

20. Kochgefäß nach einem der Ansprüche 1 bis 19, gekennzeichnet durch mindestens eine gesonderte, von außen unter Umgehung des Verdunsters (1) in den geschlossenen Gefäßinnenraum führen de Eingießöffnung (25), die vorzugsweise im Bereich eines vom Fülltrichter (15) gesonderten Eingießtrichters (26) vorgesehen ist.

21. Kochgefäß nach Anspruch 20, dadurch gekennzeichnet, daß die Eingießöffnung (25) frei oberhalb des Gefäß-Bodens (5) und vorzugsweise außerhalb des Verdunsters (1) liegt.

22. Kochgefäß nach Anspruch 20 oder 21, dadurch gekennzeichnet, daß mehrere vorzugsweise gleiche Eingießöffnungen (25), vorzugsweise in einem Kranz um den Verdunster (1), vorgesehen sind.

23. Kochgefäß nach einem der Ansprüche 20 bis 22, dadurch gekennzeichnet, daß mindestens eine, insbesondere alle Eingießöffnungen (25) etwa in Höhe des Verdunsters (1) und/oder mit geringem Abstand von dessen Außenumfang, vorzugsweise als Durchbruch in dem deckelartigen Bauteil (11), vorgesehen sind.

24. Kochgefäß nach einem der Ansprüche 20 bis 23, dadurch gekennzeichnet, daß die Größe der Eingießöffnung (25) wesentlich geringer als die der Füllöffnung (14) ist, wobei vorzugsweise der Gesamtquerschnitt aller Eingießöffnungen (25) etwa zwischen 1/5 und 1/2, vorzugsweise etwa 1/4, des Querschnittes der Füllöffnung (14) beträgt.

25. Kochgefäß nach einem der Ansprüche 20 bis 24, dadurch gekennzeichnet, daß der Eingießtrichter (26) nach Art einer vorzugsweise im Querschnitt flachschalenförmigen Rinne ausgebildet ist, die an ihrem Boden von den Eingießöffnungen (25) durchsetzt und vorzugsweise ringförmig um den Verdunster (1) vorgesehen ist.

26. Kochgefäß nach einem der Ansprüche 20 bis 25, dadurch gekennzeichnet, daß der Eingießtrichter (26) etwa in gleicher Höhe wie der Fülltrichter (15) liegt und/oder etwa gleiche Höhe wie dieser aufweist.

27. Kochgefäß nach einem der Ansprüche 9 bis 26, dadurch gekennzeichnet, daß die Halterung (12) nach unten etwa so weit wie der Fülltrichter (15) und/oder der Eingießtrichter (26), vorzugsweise geringfügig weiter, vorsteht.

28. Kochgefäß nach einem der Ansprüche 20 bis 27, dadurch gekennzeichnet, daß der Eingießtrichter (26) im Querschnitt wesentlich schmaler als der Fülltrichter (15) ist.

29. Kochgefäß nach einem der Ansprüche 20 bis 28, dadurch gekennzeichnet, daß der obere Rand des Fülltrichters (15) von dem des Eingießtrichtes (26) durch einen schmalen Zwischendamm (29) getrennt ist, der vorzugsweise geringfügig tiefer als die von ihm abgekehrte Begrenzung des Eingießtrichters (26a) liegt.

30. Kochgefäß nach einem der Ansprüche 25 bis 29, dadurch gekennzeichnet, daß der Außenumfang und/oder der Innenumfang des Eingießtrichters (26) im wesentlichen konstanten Abstand vom Umfang des Fülltrichters (15) aufweisen/aufweist.

31. Kochgefäß nach einem der Ansprüche 20 bis 30, dadurch gekennzeichnet, daß der Eingießtrichter (26) allseits im Abstand vom Außenumfang des Gefäß-Deckels (3) liegt.

## Claims

1. A sealable cooking vessel (2), more particularly a saucepan, having a removable pan lid (3) and an evaporator (1) featuring a header (10) for the storage of liquid, an evaporator orifice (19) leading to the inside space, and a filling orifice (14) accessible from outside the sealed inside space, disposed in a lid-like component (11), preferably the lid wall (9) of the pan lid (3) itself, and substantially smaller in size than the orifice cross-section in the header (10), characterized in that the header (10) is an open basin, the rim (16) of which is open to a greater width than the filling orifice (14), the basin being removably disposed on the pan lid (3) in a manner such that the underside of an escape region (20) of the evaporator orifice (19) is bounded by the rim (16) of the header (10), whilst it is bounded at the top, at a certain distance, by the lid-like component (11), preferably the lid wall (9) of the pan lid (3) itself.

2. A cooking vessel as in Claim 1, characterized in that the evaporator orifice (19) has at least one slit-shaped escape region (20), more particularly annular and disposed substantially vertically.

3. A cooking vessel as in Claim 1 or 2, characterized in that the header (10) is releasably secured on the pan lid (3) by a holder (12) preferably of the snap fastener type.

4. A cooking vessel as in Claim 3, characterized in that the holder (12) has at least two and preferably three spring clips (21) spaced approximately equally around the header (10) and having catches (23) or the like which engage in a holding countermember (24) on the header (10).

5. A cooking vessel as in Claim 4, characterized in that the catches (23) are arcuately disposed round the header (10), the holding countermember (24) preferably being formed as an annular groove passing round the header (10).

6. A cooking vessel as in any of Claims 3 to 5, characterized in that the holder (12) lies on the outer periphery of the header (10) and/or directly adjacent to its rim (16).

7. A cooking vessel as in any of Claims 4 to 6, characterized in that the catches (23) are disposed at the ends of preferably separate angle-shaped clips (21), which are preferably secured to the lid-like component (11) by their inwardly directed limbs (22).

8. A cooking vessel as in any of Claims 3 to 7, characterized in that the holder (12) subdivides the escape region (20) of the evaporator orifice (19) into a number separate orifice segments, preferably equal to the number of clips (21), each preferably subtending a wider arc than the blocked regions.

9. A cooking vessel as in any of Claims 1 to 8, characterized in that the filling orifice (14) is provided with a filling funnel (15), preferably substantially wider than the said orifice, which it surrounds, and approaching the width of the orifice cross-section of the header (10).

10. A cooking vessel as in any of Claims 1 to 9, characterized in that the filling orifice (14) is disposed near the level of the rim (16) of the header (10) and preferably coaxially with the header (10).

11. A cooking vessel as in any of Claims 1 to 10, characterized in that the width of the preferably cylindrically walled filling orifice (14) is between one fifteenth and one half that of the for example approximately cylindrical header (10), preferably about one ninth of the said width.

12. A cooking vessel as in any of Claims 1 to 11, characterized in that the filling orifice (14) is formed by a preferably circular union (18) projecting freely downwards, and preferably lies substantially below the rim (16) of the header (10).

13. A cooking vessel as in any of Claims 1 to 12, characterized in that the filling orifice (14) is disposed substantially on the central axis (13) of the pan lid (3).

14. A cooking vessel as in any of Claims 9 to 13, characterized in that the filling funnel (15) consists of a shallow dish, more particularly in the form of a wide-angled truncated cone, a sphere segment or the like, and preferably integral with the lid-like component (11).

15. A cooking vessel as in any of Claims 9 to 14, characterized in that the basal plan shape of the filling funnel (15a) is approximately equal to that of the pan lid (3a) and/or different from that of the header (10a).

16. A cooking vessel as in any of Claims 1 to 15, characterized in that the lid-like component (11) surrounding the filling orifice (14) and/or forming the filling funnel (15), and/or the header (10), is or are made from stainless steel or the like, preferably in the form of a single-piece component deep-drawn from sheet stock or the like.

17. A cooking vessel as in any of Claims 1 to 16, characterized in that the basal plan area of the header (10) is substantially smaller than that of the pan lid (3), its height being preferably between about 25 and 60 mm, more specifically 35 mm, and its capacity being between one tenth and one fifth of a litre, more specifically about one eighth of a litre.

18. A cooking vessel as in any of Claims 1 to 17, characterized in that the filling orifice (14) opens into the evaporator orifice (19) of the header (10).

19. A cooking vessel as in any of Claims 1 to 18, characterized in that the evaporator (1) is entirely disposed above the underface of the rim of the pan lid (3).

20. A cooking vessel as in any of Claims 1 to 19, characterized by at least one distinct pouring orifice (25) leading from outside the evaporator (1) into the sealed inside space, preferably disposed in the vicinity of a pouring funnel (26) distinct from the filling funnel (15).

21. A cooking vessel as in Claim 20, characterized in that the pouring orifice (25) lies freely above the pan bottom (5) and preferably outside the evaporator (1).

22. A cooking vessel as in Claim 20 or 21, characterized in that two or more pouring orifices (25) are provided, preferable alike to each other and preferably disposed in a circle round the evaporator (1).

23. A cooking vessel as in any of Claims 20 to 22, characterized in that at least one and preferably all of the pouring orifices (25) is or are disposed approximately level with the evaporator (1) and/or at a short distance from its periphery, preferably in the form of a hole or holes in the lid-like component (11).

24. A cooking vessel as in any of Claims 20 to 23, characterized in that the size of the pouring orifice(s) (25) is substantially smaller than that of the filling orifice (14), the combined cross-section of all the pouring orifices (25) preferably being between one fifth and one half, more specifically about one quarter, of the cross-section of the filling orifice (14).

25. A cooking vessel as in any of Claims 20 to 24, characterized in that the pouring funnel (26) is adapted as a trough, preferably having a shallow arcuate cross-section, with the pouring orifices (25) piercing its base, the said trough surrounding the evaporator (1) preferably circularly.

26. A cooking vessel as in any of Claims 20 to 25, characterized in that the pouring funnel (26) lies approximately level with the filling funnel (15) and/or has approximately the same height as the latter.

27. A cooking vessel as in any of Claims 9 to 26, characterized in that the holder (12) projects downwards to about the same extent as, and preferably slightly further than, the filling funnel (15) and/or the pouring funnel (26).

28. A cooking vessel as in any of Claims 20 to 27, characterized in that the pouring funnel (26) is much narrower in cross-section than the filling funnel (15).

29. A cooking vessel as in any of Claims 20 to 28, characterized in that the top rims of the filling funnel (15) and the pouring funnel (26) respectively are separated by a narrow intermediate land (29), which preferably lies slightly lower than the further edge of the pouring funnel (26a) therefrom.

30. A cooking vessel as in any of Claims 25 to 29, characterized in that the outer periphery and/or the inner periphery of the pouring funnel (26) lie or lies at a substantially constant distance from the periphery of the filling funnel (15).

31. A cooking vessel as in any of Claims 20 to 30, characterized in that the pouring funnel (26) lies at a distance `on all sides from the outer perimeter of the pan lid (3).

**Revendications**

1. Récipient de cuisson (2) susceptible d'être fermé, notamment un faitout, comprenant un couvercle (3) amovible avec un dispositif d'évaporation (1) qui présente un réservoir (10) pour recevoir un liquide et une ouverture d'évaporation (19) menant à l'intérieur du récipient, ainsi qu'une ouverture de remplissage (14) qui est accessible à partir de l'extérieur de la cavité fermée du récipient, qui est prévue dans un élément formant couvercle (11), de préférence dans la paroi de recouvrement (9) du couvercle (3) du récipient et qui est de taille sensiblement plus petite que la section d'ouverture intérieure du réservoir (10), caractérisé par le fait que le réservoir (10) est une cuvette dont l'ouverture à son bord supérieur (16) est plus large que l'ouverture de remplissage (14) et qui est disposée de façon amovible sur le couvercle (3) du récipient de manière telle que la face inférieure d'une zone de sortie (20) de l'ouverture d'évaporation (19) soit délimitée par le bord supérieur (16) du réservoir (10) et que la face supérieure de cette zone de sortie soit délimitée par l'élément formant couvercle (11), de préférence par la paroi de recouvrement (9) du couvercle (3) lui-même, disposé à distance du réservoir.

2. Récipient de cuisson selon la revendication 1, caractérisé par le fait que l'ouverture d'évaporation (19) présente au moins une zone de sortie (20) en forme de fente, notamment en forme de fente annulaire et disposée de façon essentiellement verticale.

3. Récipient de cuisson selon la revendication 1 ou 2, caractérisé par le fait que le réservoir (10) est fixé de manière amovible sur le couvercle (3) du récipient par l'intermédiaire d'un dispositif d'accrochage (12) réalisé de préférence sous forme d'encliquetage.

4. Récipient de cuisson selon la revendication 3, caractérisé par le fait que le dispositif d'accrochage (12) présente au moins cieux, de préférence trois, éléments d'accrochage (21) élastiques, répartis de façon à peu près régulière autour du réservoir (10) et munis d'ergots d'accrochage (23) ou éléments analogues qui pénètrent dans un élément antagoniste d'accrochage (24) du réservoir (10).

5. Récipient de cuisson selon la revendication 4, caractérisé par le fait que les ergots d'accrochage (23) entourent le réservoir (10) sous forme de segments d'anneau et que l'élément antagoniste d'accrochage (24) est formé de préférence par un profil continu, par exemple une gorge annulaire, entourant la périphérie du réservoir (10).

6. Récipient de cuisson selon l'une des revendications 3 à 5, caractérisé par le fait que le dispositif d'accrochage (12) est appliqué contre la circonférence du réservoir (10) et/ou est directement adjacent au bord supérieur (16) de celui-ci.

7. Récipient de cuisson selon l'une des revendications 4 à 6, caractérisé par le fait que les ergots d'accrochage (23) sont prévus aux extrémités d'éléments d'accrochage (21) coudés, de préférence séparés, qui sont fixés sur l'élément formant couvercle (11) de préférence par des branches (22) orientées vers l'intérieur.

8. Récipient de cuisson selon l'une des revendications 3 à 7, caractérisé par le fait que le dispositif d'accrochage (12) divise la zone de sortie (20) de l'ouverture d'évaporation (19) en un nombre de segments d'ouverture correspondant notamment au nombre d'éléments d'accrochage (21), les segments étant séparés les uns des autres et ayant un angle d'arc de préférence plus grand que celui des parties fermées.

9. Récipient de cuisson selon l'une des revendications 1 à 8, caractérisé par le fait que l'ouverture de remplissage (14) est prévue de préférence à l'extrémité intérieure d'un entonnoir de remplissage (15) dont la largeur est sensiblement plus grande que celle de l'ouverture de remplissage et à peu près identique à la section d'ouverture intérieure du réservoir (10).

10. Récipient de cuisson selon l'une des revendications 1 à 9, caractérisé par le fait que l'ouverture de remplissage (14) est prévue dans la zone du bord supérieur (16) du réservoir (10), de préférence de manière coaxiale avec le réservoir (10).

11. Récipient de cuisson selon l'une des revendications 1 à 10, caractérisé par le fait que la largeur de l'ouverture de remplissage (14), qui est de préférence cylindrique, est comprise entre 1/15$^e$ et 1/2, de préférence environ 1/9$^e$ de la largeur du réservoir (10) approximativement cylindrique.

12. Récipient de cuisson selon l'une des revendications 1 à 11, caractérisé par le fait que l'ouverture de remplissage (14) est formée par un embout (18) de préférence annulaire, faisant librement saillie vers le bas, et se trouve de préférence essentiellement au-dessous du bord supérieur (16) du réservoir (10).

13. Récipient de cuisson selon l'une des revendications 1 à 12, caractérisé par le fait que l'ouverture de remplissage (14) est prévue à peu près dans l'axe central (13) du couvercle (3) du récipient.

14. Récipient de cuisson selon l'une des revendications 9 à 13, caractérisé par le fait que l'entonnoir de remplissage (15) est réalisé sous la forme d'une cuvette plate, notamment sous une forme tronconique à angle obtus, sous forme de calotte sphérique ou analogue, et est réalisé de préférence d'une seule pièce avec l'élément formant couvercle (11).

15. Récipient de cuisson selon l'une des revendications 9 à 14, caractérisé par le fait que l'entonnoir de remplissage (15a) présente à peu près la même forme en projection horizontale que le couvercle (3a) du récipient et/ou une forme en projection horizontale différente de celle du réservoir (10a).

16. Récipient de cuisson selon l'une des revendications 1 à 15, caractérisé par le fait que l'élément formant couvercle (11), qui délimite l'ouverture de remplissage (14) ou forme l'entonnoir de remplissage (15), et/ou le réservoir (10) sont en acier inoxydable ou matériau analogue et sont formés de préférence par un élément embouti en tôle ou matériau analogue.

17. Récipient de cuisson selon l'une des revendications 1 à 16, caractérisé par le fait que le réservoir (10), en projection horizontale, est sensiblement plus petit que le couvercle (3) du récipient et possède, avec une hauteur d'environ 25 à 60 mm, notamment de 35 mm, une capacité d'environ 1/5$^e$ à 1/10$^e$, notamment d'environ 1/8$^e$ de litre.

18. Récipient de cuisson selon l'une des revendications 1 à 17, caractérisé par le fait que l'ouverture de remplissage (14) débouche dans l'ouverture d'évaporation (19) du réservoir (10).

19. Récipient de cuisson selon l'une des revendications 1 à 18, caractérisé par le fait que le dispositif d'évaporation (1) se trouve entièrement au-dessus de la face frontale inférieure d'un bord du couvercle (3) du récipient.

20. Récipient de cuisson selon l'une des revendications 1 à 19, caractérisé par au moins une ouverture d'alimentation (25) séparée, menant de l'extérieur dans la cavité fermée du récipient en contournant le dispositif d'évaporation (1), qui est de préférence prévue dans la zone d'un entonnoir d'alimentation (26) séparé de l'entonnoir de remplissage (15).

**21.** Récipient de cuisson selon la revendication 20, caractérisé par le fait que l'ouverture d'alimentation (25) et libre et se situe au-dessus du fond (5) du récipient et de préférence à l'extérieur du dispositif d'évaporation.

**22.** Récipient de cuisson selon la revendication 20 ou 21, caractérisé par le fait que plusieurs ouvertures d'alimentation (25), de préférence identiques, sont prévues de préférence dans une couronne entourant le dispositif d'évaporation (1).

**23.** Récipient de cuisson selon l'une des revendications 20 à 22, caractérisé par le fait qu'au moins une, mais de préférence toutes les ouvertures d'alimentation (25) sont prévues à peu près à hauteur du dispositif d'évaporation (1) et/ou à une faible distance de la circonférence de celui-ci, de préférence sous forme de traversées dans l'élément formant couvercle (11).

**24.** Récipient de cuisson selon l'une des revendications 20 à 23, caractérisé par le fait que la grandeur de l'ouverture d'alimentation (25) est sensiblement inférieure à celle de l'ouverture de remplissage (14), la section totale de toutes les ouvertures d'alimentation (25) étant comprise de préférence environ entre 1/5$^e$ et 1/2 de la section de l'ouverture de remplissage (14) et correspond de préférence environ à 1/4 de celle-ci.

**25.** Récipient de cuisson selon l'une des revendications 20 à 24, caractérisé par le fait que l'entonnoir d'alimentation (26) est réalisé à la manière d'une rainure qui a de préférence une section en forme de cuvette plate, est traversée dans son fond par les ouvertures d'alimentation (25) et est de préférence disposée sous une forme annulaire autour du dispositif d'évaporation (1).

**26.** Récipient de cuisson selon l'une des revendications 20 à 25, caractérisé par le fait que l'entonnoir d'alimentation (26) se trouve à peu près à la même hauteur que l'entonnoir de remplissage (15) et/ou présente à peu près la même hauteur que celui-ci.

**27.** Récipient de cuisson selon l'une des revendications 9 à 26, caractérisé par le fait que le dispositif d'accrochage (12) fait saillie vers le bas à peu près aussi loin que l'entonnoir de remplissage (15) et/ou l'entonnoir d'alimentation (26), de préférence légèrement plus loin.

**28.** Récipient de cuisson selon l'une des revendications 20 à 27, caractérisé par le fait que l'entonnoir d'alimentation (26) a une section sensiblement plus étroite que l'entonnoir de remplissage (15).

**29.** Récipient de cuisson selon l'une des revendications 20 à 28, caractérisé par le fait que le bord supérieur de l'entonnoir de remplissage (15) est séparé de celui de l'entonnoir d'alimentation (26) par un rebord intermédiaire (29) qui est de préférence légèrement plus bas que le bord opposé de l'entonnoir d'alimentation (26a).

**30.** Récipient de cuisson selon l'une des revendications 25 à 29, caractérisé par le fait que la périphérie extérieure et/ou la périphérie intérieure de l'entonnoir d'alimentation (26) présente(nt) une distance essentiellement constante de la périphérie de l'entonnoir de remplissage (15).

**31.** Récipient de cuisson selon l'une des revendications 20 à 30, caractérisé par le fait que l'entonnoir d'alimentation (26) est disposé sur tous les côtés à distance de la périphérie du couvercle (3) du récipient.

EP 0 262 375 B1

Fig.4

Fig.5

Fig.6

Fig.1

Fig.2

Fig.3

15